# EUROPEAN PATENT SPECIFICATION

(11) **EP 4 637 128 B1**
(45) Date of publication and mention of the grant of the patent: **17.06.2026**
(21) Application number: 23902131.4
(22) Date of filing: 04.08.2023
(51) Int. Cl.: H04M 11/02, H04W 4/70, G06Q 10/083, H04L 67/12, B25J 11/00, H04W 88/16, G06Q 50/12

(54) **ROBOT CALLING SYSTEM BASED ON LORA, AND METHOD**
ROBOTISCHES RUFSYSTEM AUF DER BASIS VON LORA SOWIE VERFAHREN
SYSTÈME D'APPEL DE ROBOT BASÉ SUR LORA, ET PROCÉDÉ

(30) Priority: 15.12.2022 CN 202211616673
(43) Date of publication of application: 22.10.2025
(73) Proprietor: Shenzhen Pudu Technology Co., Ltd., Shenzhen, Guangdong 518000 (CN)
(72) Inventor: DENG, Longfei, Shenzhen, Guangdong 518000 (CN); GONG, Xiaofeng, Shenzhen, Guangdong 518000 (CN)
(74) Representative: Murgitroyd & Company
(86) International application number: PCT/CN2023/111169
(87) International publication number: WO 2024/124921

(56) References cited:
- WO-A1-2022/227352
- CN-A- 107 491 075
- CN-A- 113 370 209
- CN-A- 116 233 318
- CN-U- 210 536 684
- CN-U- 212 749 629
- CN-U- 214 481 287
- KR-A- 20220 135 877

## Description

### TECHNICAL FIELD

The present disclosure relates to the field of robot technologies, and in particular, to a robot calling system based on LoRa, a method, a device and a storage medium.

### BACKGROUND

With the development of robot technologies, more and more industries are beginning to use robots, especially in the catering industry. In order to reduce labor costs and enhance efficiency, robots are gradually being adopted to replace some labor.

In a current food service robot service system, customers use calling terminals to request food service robots to their locations to provide services. Since the calling terminals generally use WIFI networks to communicate with the food service robots, data transmission is highly dependent on the network. Once the network fluctuates or is disconnected, data reception is delayed or data is lost, resulting in poor stability and accuracy of the data transmission, which leads to a low call success rate.

WO 2022/227352 A1 relates to the technical field of multi-robot cooperation, in particular to a multi-robot-multi-person cooperative control method, device and system.

CN 212 749 629 U relates to the technical field of information interaction between a flying robot and an express "hive".

### SUMMARY

According to various embodiments of the present disclosure, a robot calling system based on LoRa, a method, a computer device, a computer-readable storage medium and a computer program product are provided.

In a first aspect, the present disclosure provides a robot calling system based on LoRa. The calling system includes: a LoRa gateway, at least one calling terminal and a robot cluster, the at least one terminal and the robot cluster establishing LoRa communication with the LoRa gateway.

The calling terminal is configured to encapsulate and generate a robot call request based on a custom serial communication protocol, and send the robot call request to the LoRa gateway.

The LoRa gateway is configured to determine a target robot from the robot cluster in response to the robot call request, and send a control instruction to the target robot.

The target robot is configured to go to a location of the calling terminal in response to the control instruction.

In a second aspect, the present disclosure further provides a calling method, executed by a LoRa gateway. The method includes:
obtaining a robot call request encapsulated and generated by a calling terminal based on a custom serial communication protocol;
determining a target robot from a robot cluster in response to the robot call request; and
sending a control instruction to the target robot, such that the target robot goes to a location of the calling terminal in response to the control instruction.

In a third aspect, the present disclosure further provides another calling method, executed by a calling terminal. The method includes:
encapsulating and generating a robot call request based on a custom serial communication protocol, and sending the robot call request to a LoRa gateway, such that the LoRa gateway determines a target robot based on the robot call request, and sends a control instruction to the target robot, such that the target robot goes to a location of the calling terminal in response to the control instruction.

In a fourth aspect, the present disclosure further provides another a calling method, executed by a robot. The method includes:
obtaining a control instruction sent by a LoRa gateway, the control instruction being generated by the LoRa gateway based on a robot call request sent by a calling terminal; and
going to a location of the calling terminal in response to the control instruction.

In a fifth aspect, the present disclosure further provides a computer device. The computer device includes a memory and a processor. The memory stores a computer program, and the processor implements the steps of the above method when executing the computer program.

In a sixth aspect, the present disclosure further provides a computer-readable storage medium. The computer-readable storage medium stores a computer program, and when the computer program is executed by a processor, the steps of the above method are implemented.

In a seventh aspect, the present disclosure further provides a computer program product. The computer program product includes a computer program, and when the computer program is executed by a processor, the steps of the above method are implemented.

One or more embodiments of the present disclosure will be described in detail below with reference to drawings. Other features, objects and advantages of the present disclosure will become more apparent from the description, drawings, and claims.

### BRIEF DESCRIPTION OF THE DRAWINGS

In order to describe the technical solutions of the embodiments of the present disclosure or the conventional technologies more clearly, the accompanying drawings required for describing the embodiments or for describing the conventional technologies will be briefly introduced as follows. Apparently, the accompanying drawings, in the following description, illustrate merely some embodiments of the present disclosure, for a person of ordinary skill in the art, drawings of other embodiments can also be obtained according to these accompanying drawings without making any creative efforts.
FIG. 1 is a diagram illustrating an architecture of a robot calling system based on LoRa in an embodiment.
FIG. 2 is a flow diagram illustrating a calling method in an embodiment.
FIG. 3 is a flow diagram illustrating a calling method in another embodiment.
FIG. 4 is a schematic diagram illustrating a custom SLIP format in an embodiment.
FIG. 5 is a flow diagram illustrating a calling method in another embodiment.
FIG. 6 is a flow diagram illustrating a calling method in another embodiment.
FIG. 7 is a block diagram illustrating a configuration of a calling device in an embodiment.
FIG. 8 is a block diagram illustrating a configuration of a calling device in another embodiment.
FIG. 9 is a block diagram illustrating a configuration of a calling device in another embodiment.
FIG. 10 is a diagram illustrating an internal configuration of a computer device in an embodiment.

### DETAILED DESCRIPTION OF THE EMBODIMENTS

In order to facilitate understanding of the present disclosure, the present disclosure will be described more fully below with reference to the relevant accompanying drawings. Preferred embodiments of the present disclosure are presented in the accompanying drawings. Rather, these embodiments are provided for the purpose of making the present disclosure more thorough and comprehensive.

Unless otherwise defined, all technical and scientific terms used herein have the same meaning as commonly understood by a person of ordinary skill in the art to which the present disclosure belongs. The terms used herein in the specification of the application are for the purpose of describing specific embodiments only, and are not intended to limit the application. The term "and/or" as used herein includes any and all combinations of one or more of the relevant listed items.

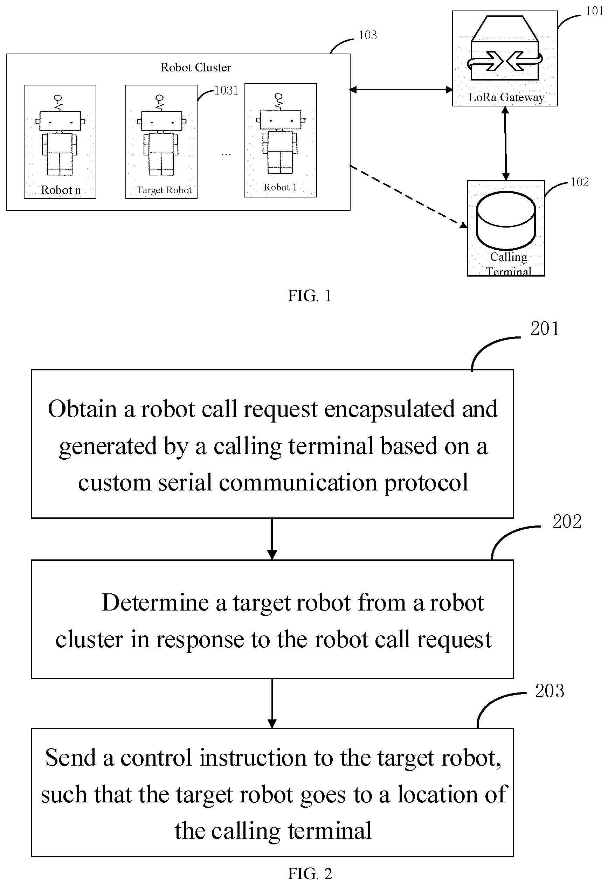

In some embodiments, as shown in FIG. 1, a diagram illustrating an architecture of a robot calling system based on LoRa is provided. Referring to FIG. 1, the system includes a LoRa gateway 101, at least one calling terminal 102 and a robot cluster 103 that establish LoRa communication with the LoRa gateway. The LoRa gateway 101 performs LoRa communication with robots in the robot cluster 103 and the calling terminal 102, respectively. After receiving a robot call request, the LoRa gateway 101 determines a target robot 1031 from the robot cluster 103, and controls the target robot 1031 to go to a location of the calling terminal 102. It should be noted that the robot cluster 103 includes at least one robot.

The target robot 103 is a robot in the robot cluster 103 connected to the LoRa gateway 101, and is configured to go to the calling terminal 102 to provide services. It can be understood that since the calling terminal 102, the robots in the robot cluster 103 and the LoRa gateway 101 form a LoRa local area network (LAN), even if the network is disconnected or the network fluctuates, data transmission between the calling terminal 102, the robots in the robot cluster 103 and the LoRa gateway 101 will not be affected. In other words, the robots in the robot cluster 103 can respond to the robot call request in time, so as to quickly reach the location of the calling terminal 102, thereby improving the call success rate.

Optionally, compared with 4G, WIFI, etc., the LoRa LAN can achieve a longer transmission distance with the same power consumption, and the data transmission will not be affected by the surge in the number of mobile terminals or WIFI terminals in the environment.

Exemplarily, the calling terminal 102 encapsulates and generates a robot call request based on a custom serial communication protocol, and sends the robot call request to the LoRa gateway 101. In response to the robot call request, the LoRa gateway 101 determines a target robot 1031 from the robot cluster 103 and sends a control instruction to the target robot 1031. The target robot 1031 goes to a location of the calling terminal 102 in response to the control instruction.

The custom serial communication protocol is a self-defined serial communication protocol. It can be understood that the custom serial communication protocol may be a completely new custom serial communication protocol, or may be obtained by custom modifying an existing serial communication protocol. Data frames communicated between the robots, the LoRa gateway and the calling terminal can all be encapsulated using the custom serial communication protocol.

In the robot calling system based on LoRa described above, by establishing the robot calling system based on LoRa, and encapsulating and generating the robot call request based on the custom serial communication protocol, the target robot is determined in response to the robot call request, and the control instruction is generated to control the target robot to the location of the calling terminal, thereby improving the accuracy and stability of data transmission, and thus improving the call success rate.

In some embodiments, the control instruction includes a unique identification of the calling terminal. The target robot 1031 is further configured to: determine a map location of the calling terminal 102 based on the unique identification of the calling terminal 102, and go to the location of the calling terminal 102 based on the map location.

The map location is a location of the calling terminal in an operating environment of the robot calling system based on LoRa. For example, if the operating environment is a restaurant, a location of the calling terminal in a map of the restaurant is the map location.

Exemplarily, the target robot 1031 determines the map location of the calling terminal 102 based on a corresponding relationship between the unique identification of the calling terminal 102 and the map location, and goes to the location of the calling terminal 102 based on the map location.

In an optional embodiment, the target robot 1031 pre-stores a map of the operating environment. The map includes the map location (specifically including X, Y coordinates, and may further including angle information θ) of the calling terminal 102 in the operating environment, and binding information of the unique identification of the corresponding calling terminal 102.

When the target robot 1031 receives the unique identification of the calling terminal 102, the map location of the corresponding calling terminal 102 can be determined based on the unique identification.

In the above embodiment, the location of the calling terminal can be accurately determined based on the corresponding relationship between the unique identification of the calling terminal and the map location.

In some embodiments, the control instruction includes a map location of the calling terminal 102, and the target robot 1031 is further configured to: go to the location of the calling terminal 102 based on the map location. The map location is determined by the LoRa gateway 101 based on the unique identification of the calling terminal 102 in the robot call request.

Exemplarily, upon receiving the robot call request sent by the calling terminal 102, the LoRa gateway 101 determines the map location of the calling terminal 102 based on the corresponding relationship between the unique identification of the calling terminal 102 in the robot call request and the map location, and generates the control instruction including the map location. Upon receiving the control instruction including the map location, the target robot 1031 goes to the location of the calling terminal 102 based on the map location.

In an optional embodiment, the LoRa gateway 101 may only include a gateway. The gateway is configured to achieve communication between the calling terminal 102 and the robot cluster 103.

In an optional embodiment, the LoRa gateway 101 includes a gateway and a cloud platform.

In an optional embodiment, the gateway and the cloud platform can communicate with each other. The gateway is responsible for communicating with the calling terminal 102, and the cloud platform is responsible for communicating with the robot cluster 103.

Optionally, the communication method between the gateway and the cloud platform is not limited in the present disclosure.

In another optional embodiment, the gateway may be configured to achieve communication between the calling terminal 102 and the robot cluster 103, and the cloud platform may be configured to assist the gateway in the calculation of relevant data.

For example, in an optional embodiment, the LoRa gateway 101 pre-stores a map of the corresponding operating environment. The map includes the map location (specifically including X, Y coordinates, and may further including angle information θ) of the calling terminal 102 in the operating environment, and binding information of the unique identification of the corresponding calling terminal 102. Upon receiving the robot call request sent by the calling terminal 102, the LoRa gateway 101 determines the map location of the calling terminal 102 based on the corresponding relationship between the unique identification of the calling terminal 102 in the robot call request and the map location , and sends the map location as a part of the control instruction to the target robot 1031, so that upon receiving the control instruction including the map location, the target robot 1031 goes to the location of the calling terminal 102 based on the map location.

In an optional embodiment, the gateway may pre-store a map of the corresponding operating environment and perform calculations.

In other embodiments, the cloud platform may pre-store a map of the corresponding operating environment. Upon obtaining the unique identification of the calling terminal 102 from the gateway, the cloud platform calculates the map location of the calling terminal 102 corresponding to the unique identification, and sends the map location to the gateway. Further, the gateway sends the map location as a part of the control instruction to the target robot 1031, so that upon receiving the control instruction including the map location, the target robot 1031 goes to the location of the calling terminal 102 based on the map location.

In some embodiments, the custom serial communication protocol has a custom session mode field. The target robot 1031 is further configured to encapsulate and generate an arrival message based on the custom serial communication protocol after arriving at the location of the calling terminal 102, and send the arrival message to the LoRa gateway 101. The arrival message is encapsulated with a second session mode identification, and a second session mode represented by the second session mode identification refers to sending response information that does not carry relevant data.

The LoRa gateway 102 is further configured to send an arrival prompt instruction to the calling terminal 102 in response to the arrival message, and return the response information that does not carry relevant data to the target robot 1031 based on the second session mode identification.

The calling terminal 102 is further configured to output arrival prompt information in response to the arrival prompt instruction. The arrival prompt information indicates that the target robot 1031 has arrived at the calling terminal.

The session mode refers to a communication mode between an initiating session party and a requested session party. The session mode may be set according to the application scenario, and can be set to one or more.

It can be understood that a session mode field is defined in the custom serial communication protocol, and a data frame encapsulated based on the custom serial communication protocol carries the session mode field. The data frame sent by the initiating session party carries the session mode field, and the requested session party determines a session mode of the current session by identifying the session mode field in the data frame, so as to return the corresponding data frame. Information written into the session mode field for representing the session mode is the session mode identification. It can be understood that different session modes correspond to different session mode fields. Based on different session mode fields, there may be a first session mode, a second session mode, a third session mode, a fourth session mode, and so on. A first session mode identification refers to information representing the first session mode written into the session mode field, and a second session mode identification refers to information representing the second session mode written into the session mode field.

It can be understood that the requested session party may determine that a data frame that does not carry relevant data needs to be returned to the initiating session party by identifying the field corresponding to the second session mode in the received data frame. For example, the custom second session mode field in the custom serial communication protocol is represented as 0x02. After arriving at the location of the calling terminal, the target robot sends an arrival prompt information to the LoRa gateway. In a case that the session mode field of the data frame received by the LoRa gateway is 0x02, it means that the LoRa gateway needs to return a data frame that does not carry data to the target robot, indicating that the LoRa gateway has known that the target robot has arrived at the location of the calling terminal.

The arrival message refers to a message sent to the LoRa gateway when the target robot arrives at the calling terminal, indicating that the target robot has arrived at the calling terminal. The arrival message includes at least one of an address of the calling terminal, an arrival instruction, or current location information.

The arrival prompt instruction is an instruction sent by the LoRa gateway to prompt the calling terminal that the target robot has arrived at the calling terminal.

The arrival prompt information is a prompt information generated by the calling terminal when the target robot arrives at the location of the calling terminal, and is configured to prompt that the target robot has arrived. The arrival prompt information includes at least one of a sound prompt or a light prompt. For example, the arrival prompt information may be a voice broadcast that the robot has arrived, or a light that prompts the robot has arrived, which is not limited in this embodiment.

In some embodiments, as shown in FIG. 2, a flow diagram illustrating a calling method is provided. Taking the method executed by the LoRa gateway 101 in FIG. 1 as an example, the method includes the following steps.

In step 201, a robot call request encapsulated and generated by a calling terminal based on a custom serial communication protocol is obtained.

Exemplarily, in a case that a user needs to call a robot, a robot calling operation may be performed by using the calling terminal. In response to the robot calling operation, the calling terminal may encapsulate and generate the robot call request based on the custom serial communication protocol, and send the robot call request to the LoRa gateway.

In some embodiments, when the calling terminal encapsulates and generates the robot call request based on the custom serial communication protocol, a first session mode identification may be written into the session mode field of the custom serial communication protocol. Therefore, the robot call request will carry the first session mode identification, indicating that a first session mode is used for communication. The LoRa gateway can extract the first session mode identification from the obtained robot call request.

In step 202, in response to the robot call request, a target robot is determined from the robot cluster.

Exemplarily, the LoRa gateway determines the target robot from the robot cluster based on at least one of location information or state information in response to the robot call request.

The location information is real-time location information of the robot. The state information is configured to indicate whether the target robot is in an idle state. Optionally, the state information specifically includes an idle state and an occupation state. The occupation state may be an overall state, which may include sub-states such as delivering food, returning dishes, and being called, which are not limited here.

In an optional embodiment, the robot may report its location information and state information at a preset frequency.

In an optional embodiment, the LoRa gateway may send an inquiry to at least one robot at a preset frequency, and obtain the location information and the state information reported by the robot. Alternatively, when the LoRa gateway needs to obtain the location information and the state information of the robot, the LoRa gateway sends a temporary inquiry to at least one robot, and obtains the location information and the state information reported by the robot.

In an optional embodiment, the LoRa gateway may only include a gateway. The gateway is configured to achieve communication between the calling terminal and the robot cluster.

In an optional embodiment, the LoRa gateway includes a gateway and a cloud platform.

In an optional embodiment, the gateway and the cloud platform can communicate with each other. The gateway is responsible for communicating with the calling terminal 102, and the cloud platform is responsible for communicating with the robot cluster.

Optionally, the communication method between the gateway and the cloud platform is not limit in the present disclosure.

In another optional embodiment, the gateway may be configured to achieve communication between the calling terminal and the robot cluster 103, and the cloud platform is configured to assist the gateway in the calculation of relevant data.

In an optional embodiment, the LoRa gateway determines the target robot from the robot cluster based on at least one of location information or state information in response to the robot call request. Specifically, the gateway may determine the target robot from the robot cluster based on at least one of the location information or the state information. Alternatively, the cloud platform may determine the target robot from the robot cluster based on at least one of the location information or the state information, which is not limited here.

In step 203, a control instruction is sent to the target robot, such that the target robot goes to a location of the calling terminal in response to the control instruction.

Exemplarily, when the target robot is determined, the LoRa gateway sends the control instruction to the target robot. The target robot switches the state information to the occupation state in response to the control instruction, and goes to the location of the calling terminal based on the control instruction.

In some embodiments, after sending the control instruction to the target robot such that the target robot goes to the location of the calling terminal in response to the control instruction, the LoRa gateway determines that the current session mode is the first session mode based on the session mode field in the received robot call request, and returns a data frame matching the first session mode to the calling terminal. The data frame carries call success response information.

The call success response information is response information configured to indicate that the call is successful. It can be understood that when the call to the robot is successful, the LoRa gateway may return a corresponding data frame to the calling terminal, which carries the call success response information, such that the calling terminal knows that the call to the robot is successful.

It should be noted that the content of the returned call success response information will be different for different session modes. In this embodiment, the robot call request carries the first session mode identification, indicating that the session mode for responding to the robot call request is the first session mode. After the LoRa gateway successfully calls the robot, the matched call success response information may be generated according to the first session mode.

In the calling method described above, by establishing the robot calling system based on LoRa, and encapsulating and generating the robot call request based on the custom serial communication protocol, the target robot is determined in response to the robot call request, and the control instruction is generated to control the target robot to go to the location of the calling terminal, thereby improving the accuracy and stability of data transmission, and thus improving the call success rate.

In some embodiments, the first session mode represented by the first session mode identification refers to that response information carrying relevant data needs to be sent. The method further includes: if there is no target robot in an idle state, returning call failure response information to the calling terminal based on the first session mode identification.

It can be understood that the requested session party may determine that a data frame carrying relevant data needs to be returned to the initiating session party by identifying the field corresponding to the first session mode in the received data frame. For example, the custom first session mode field in the custom serial communication protocol is represented as Ox01. In a session in which the robot inquiries about a connection state from the LoRa gateway (there are four modes of connection state: unregistered, represented as 0x00; registered, represented as Ox01; logged in, represented as 0x02; and disconnected, represented as 0x03), if the session mode field in the data frame received by the LoRa gateway is Ox01, the data frame carrying relevant data returned by the LoRa gateway to the robot refers to a data frame carrying information about the connection state.

The call failure response information is response information configured to indicate a call failure. It can be understood that when the call to the robot fails, i.e., there is no target robot, the LoRa gateway may return a corresponding data frame to the calling terminal, which carries the call failure response information, such that the calling terminal knows that the call to the robot has failed.

Exemplarily, upon receiving the robot call request, the LoRa gateway finds that all robots connected to the LoRa gateway are occupied, i.e., there is no robot in an idle state. In this case, based on the first session mode identification, it is determined that the current session mode is the first session mode, and the corresponding data frame is returned to the calling terminal. The data frame carries the call failure response information.

In this embodiment, the call failure response information is returned to the calling terminal through the first session mode identification, and the calling terminal is notified of the call situation in time, thereby avoiding the calling terminal from making a long call and causing a waste of resources.

In some embodiments, the custom serial communication protocol has a custom session mode field, and the robot call request includes a first session mode identification in the session mode field. The custom serial communication protocol further has a custom source address field, and the robot call request further includes an address of the calling terminal in the source address field. After sending the control instruction to the target robot, such that the target robot goes to the location of the calling terminal in response to the control instruction, the method further includes: returning call success response information matching the first session mode identification to the calling terminal based on the address of the calling terminal.

The source address field refers to a source address field in the data frame encapsulated in the custom serial communication protocol, i.e., an address field of the initiating session party. In order to distinguish which of the LoRa gateway, the robot or the calling terminal is the initiating session party, their addresses should be different. It can be understood that the requested session party may know the address of the initiating session party by identifying the source address field in the data frame, so as to accurately return the corresponding data frame. For example, the address field of the LoRa gateway is represented as 0x00, the address field of the calling terminal is represented as 0x01, and the address field of the robot is represented as 0x02. In a session, in a case that the source address field in the data frame received by the LoRa gateway is 0x02, it indicates that the initiating session party is a robot, and then the LoRa gateway returns the corresponding data frame to the robot based on the source address field.

In this embodiment, by determining the source address field, accurate data transmission is realized and the call success rate is improved.

In some embodiments, determining the target robot from the robot cluster in response to the robot call request includes: obtaining state information reported by the robot cluster; and determining a robot whose state information is an idle state as the target robot from the robot cluster based on the state information.

The state information includes but is not limited to any one of an idle state, an occupation state and a forced occupation state.

It can be understood that the idle state indicates that the robot is not occupied, the occupation state indicates that the robot is occupied, and the forced occupation state indicates that the robot encounters an emergency situation while going to the location of the calling terminal, for example, the robot suddenly shuts down, encounters an obstacle and is unable to move, etc.

Exemplarily, upon receiving the robot call request, the LoRa gateway obtains the state information reported by the connected robot cluster, and the state information includes any one of the idle state, the occupation state, and the forced occupation state. Further, based on the state information, the LoRa gateway determines the robot of which the state information is an idle state as the target robot from the robot cluster.

In some embodiments, determining, based on state information, the robot of which the state information is an idle state as the target robot from the robot cluster includes: if there is only one robot in an idle state, determining the robot as the target robot; and if multiple robots in an idle state are found, determining the target robot base on location information.

In the above embodiment, the target robot in an idle state is determined based on the state information, so that the target robot can go to the location of the calling terminal in time, thereby improving the call success rate.

In some embodiments, determining the target robot from the robot cluster in response to the robot call request includes: obtaining state information and location information reported by the robot cluster; obtaining a map location of the calling terminal; determining robots whose state information is an idle state from the robot cluster based on the state information; and determining a robot closest to the calling terminal as the target robot from the robots whose state information is an idle state based on the map location of the calling terminal and the location information.

Exemplarily, the LoRa gateway obtains the state information and the location information reported by the robot cluster, as well as the map location of the calling terminal. In a case that at least two robots whose state information is an idle state are determined from the robot cluster based on the state information, the robot closest to the calling terminal is determined as the target robot from the robots whose state information is an idle state based on the map location of the calling terminal and the location information.

It should be noted that being closest to the calling terminal may mean that a straight-line distance between the robot and the calling terminal is the shortest, or an actual path between the robot and the calling terminal is the shortest, or a map planned path between the robot and the calling terminal is the shortest, which is not limited in this embodiment.

In the above embodiment, in the case that there are at least two robots in an idle state, the robot closest to the calling terminal is determined as the target robot, which can ensure that the target robot reaches the calling terminal quickly, thereby shortening the call time.

In some embodiments, after the target robot arrives at the location of the calling terminal, an arrival message encapsulated based on the custom serial communication protocol is received from the target robot. A second session mode identification is encapsulated in the arrival message, and a second session mode represented by the second session mode identification refers to sending response information that does not carry relevant data. In response to the arrival message, the calling terminal is controlled to output arrival prompt information, and then response information that does not carry relevant data is returned to the target robot based on the second session mode identification. The arrival prompt information indicates that the robot has arrived at the calling terminal.

Exemplarily, after the target robot arrives at the calling terminal, it generates and encapsulates an arrival message based on the custom serial communication protocol, and sends the arrival message to the LoRa gateway. Upon receiving the arrival message, the LoRa gateway sends an arrival prompt instruction to the calling terminal to prompt the calling terminal that the robot has arrived. Further, the calling terminal outputs the arrival prompt information in response to the arrival prompt instruction.

In this embodiment, based on the second session identification, it is determined that the session mode between the recipient of the robot call request and the robot is the second session mode, so that data can be transmitted accurately, thereby ensuring the reliability of data transmission. Meanwhile, after the target robot arrives at the location of the calling terminal, the calling terminal outputs arrival the prompt information to prompt that the target robot has arrived, so as to prompt a user that the target robot has arrived.

In some embodiments, in a case that a one-way message encapsulated based on the custom serial communication protocol and carrying a third session mode identification is received, no response is made to the received one-way message. A third session mode represented by the third session mode identification refers to no response required.

The one-way message refers to a message sent in one-way, i.e., a sender is only responsible for sending the message and does not wait for a response.

It can be understood that the one-way message is determined according to a session scenario. For example, in a session scenario where the robot sends heartbeat data to the LoRa gateway, or the robot reports location information and state information to the LoRa gateway, the message sent by the robot is a one-way message, and the receiver does not need to respond.

The third session mode identification refers to information representing the third session mode written into the session mode field.

It can be understood that the requested session party may determine that a data frame that does not carry relevant data needs to be returned to the initiating session party by identifying the field corresponding to the third session mode in the received data frame. For example, the custom third session mode field in the custom serial communication protocol is represented as 0x03. In a session in which the robot sends heartbeat data to the LoRa gateway at regular intervals, and the heartbeat data is used to indicate that the robot is online, if the session mode field of the data frame received by the LoRa gateway is 0x03, it is indicated that the LoRa gateway does not need to respond to the received data frame.

In this embodiment, based on the third session identification, it is determined that the session mode between the LoRa gateway and the robot is the third session mode, so that data can be transmitted accurately, thereby ensuring the reliability of data transmission.

In some embodiments, during the movement of the target robot to the location of the calling terminal, state information of the target robot is determined. If the state information indicates that the target robot is forcibly occupied, a response processing for the forced occupation is performed.

The response processing for the forced occupation refers to a processing performed in a case that the state information of the target robot is in the forced occupation state.

Exemplarily, if the target robot runs out of power and shuts down while going to the location of the calling terminal, the target robot will switch the state information to the forced occupation state before shutting down. After determining that the state information of the target robot is in the forced occupation state, the LoRa gateway will perform the response processing for the forced occupation. For example, the LoRa gateway may send a call failure message to the calling terminal, and the calling terminal may display the call failure. Alternatively, the LoRa gateway may obtain the state information of all connected robots again, find the robot that is closest to the calling terminal and is in an idle state as the target robot, and control the target robot to go to the location of the calling terminal.

In this embodiment, by determining the state information of the target robot in the process of going to the calling terminal, the calling terminal can be promptly notified of the call failure or a new robot can be rearranged to go to the calling terminal in the case that the state information of the target robot is the forced occupation state, thereby improving the call success rate.

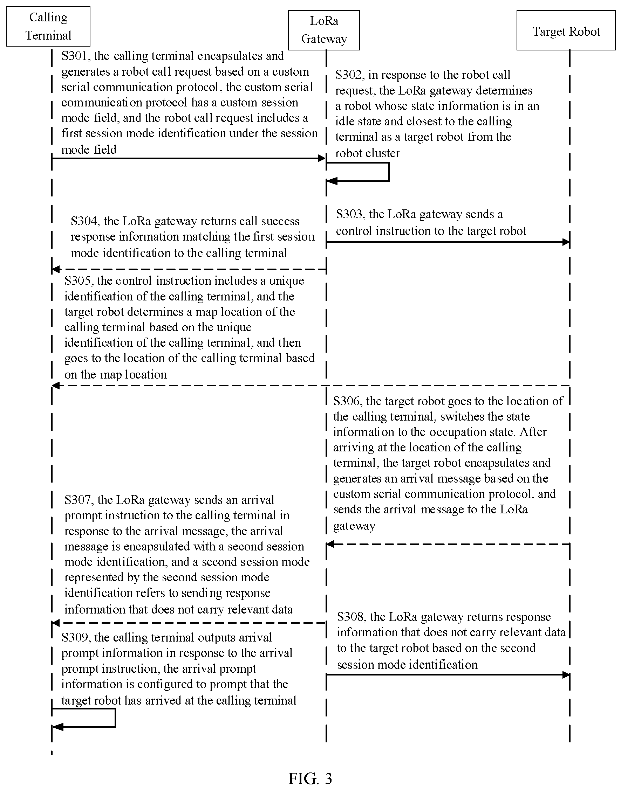

In another embodiment, as shown in FIG. 3, another calling method is provided. The method specifically includes the following steps.

In step S301, the calling terminal encapsulates and generates a robot call request based on a custom serial communication protocol. The custom serial communication protocol has a custom session mode field, and the robot call request includes a first session mode identification in the session mode field.

In step S302, in response to the robot call request, the LoRa gateway determines a robot whose state information is an idle state and closest to the calling terminal as a target robot from the robot cluster.

In step S303, the LoRa gateway sends a control instruction to the target robot.

In step S304, the LoRa gateway returns call success response information matching the first session mode identification to the calling terminal.

In some embodiments, if there is no target robot in an idle state, call failure response information is returned to the calling terminal based on the first session mode identification.

In step S305, the control instruction includes a unique identification of the calling terminal, and the target robot determines a map location of the calling terminal based on the unique identification of the calling terminal and then goes to the location of the calling terminal based on the map location.

Furthermore, during the movement of the target robot to the location of the calling terminal, the LoRa gateway determines state information of the target robot. If the state information indicates that the target robot is forcibly occupied, a call failure message may be sent to the calling terminal. Alternatively, the LoRa gateway may obtain the state information of all connected robots again, find the robot that is closest to the calling terminal and is in an idle state as the target robot, and control the target robot to go to the location of the calling terminal.

In some embodiments, the control instruction includes a map location of the calling terminal. The target robot goes to the location of the calling terminal based on the map location. The map location is determined by the LoRa gateway through the unique identification of the calling terminal contained in the robot call request.

In step S306, the target robot goes to the location of the calling terminal, switches the state information to the occupation state. After arriving at the location of the calling terminal, the target robot encapsulates and generates an arrival message based on the custom serial communication protocol, and sends the arrival message to the LoRa gateway.

In step S307, the LoRa gateway sends an arrival prompt instruction to the calling terminal in response to the arrival message. The arrival message is encapsulated with a second session mode identification, and a second session mode represented by the second session mode identification refers to sending response information that does not carry relevant data.

In step S308, the LoRa gateway returns response information that does not carry relevant data to the target robot based on the second session mode identification.

In step S309, the calling terminal outputs arrival prompt information in response to the arrival prompt instruction. The arrival prompt information is configured to prompt that the target robot has arrived at the calling terminal.

In this embodiment, based on the session mode field in the robot call request encapsulated based on the custom serial communication protocol, the call success response information matching the first session mode identification is returned to the caller based on the first session mode field, thereby improving the accuracy and stability of data transmission. During the movement of the robot to the location of the calling terminal, timely response and processing are performed in a case that the state information of the target robot is a forced occupation state, thereby improving the call success rate.

In some embodiments, the custom serial communication protocol may be a custom protocol based on a serial line internet protocol (SLIP). In other words, the custom serial communication protocol of the present disclosure may be obtained by customizing the SLIP, and may be referred to as a custom SLIP format.

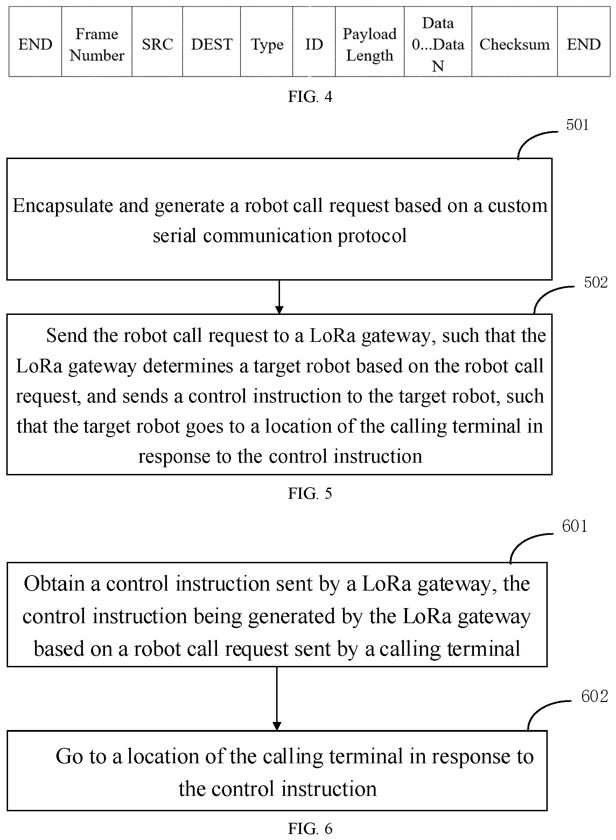

In some embodiments, referring to FIG. 4, a custom SLIP format is provided. The specific description and explanation of the custom SLIP format are as follows:

There are two END characters. Each data frame starts and stops with an END character.

There is a frame number. When two parties are communicating, the frame number automatically increases by 1 each time a frame is successfully transmitted. If three attempts to send a frame are unsuccessful, the frame number also automatically increase by 1 when a new frame is transmitted next time. When a value of the frame number accumulates to 255, the frame number starts to accumulate from 0 again, and the cycle continues. If the data frame is a response frame, the frame number is a number of the last received non-response frame, i.e., only the last non-response frame is responded to.

There are an address of the initiating session party, i.e., source address field (SRC) and an address of the requested session party (DEST). In each session, the data frame carries the addresses of the initiating session party and the requested session party. Exemplarily, an address of the LoRa gateway is defined as 0x00, an address of the calling terminal is defined as 0x01, and an address of the robot is defined as Ox10. When the SRC in a data frame is 0x00 and the DEST is Ox10, it can be determined that the data frame is sent by the LoRa gateway to the robot.

There is a Type field (session mode field). A session mode between the initiating session party and the requested session party is determined by determining the Type field. Exemplarily, it can be set that the initiating session party is Party A, and the requested session party is Party B. There is no master-slave relationship between the two parties except for the one-way session. In one-way session, the initiating session party is the master (Party A), and the requested session party is the slave (Party B).

In some embodiments, there may be three types of session modes between the Party A and the Party B. In a first session mode, the Party A initiates a session, and the Party B responds by carrying relevant data. In a second session mode, the Party A initiates a session, and the Party B responds by carrying no relevant data. In a third session mode, the Party A initiates a session, and the Party B does not need to respond. In this embodiment, optionally, the session modes may include, but are not limited to, the first session mode, the second session mode, and the third session mode. Exemplarily, the Type field of a sender may be set to Ox01, which is configured for the sender to read and query relevant information of a receiver, and the receiver needs to carry relevant data in response. The Type field of the sender may be set to 0x02, which is configured for the sender to set, modify, and notify the receiver, and the receiver needs to carry relevant data in response. The Type field of the sender may be set to 0x03, which is configured for the sender to set, modify, and notify the receiver, and the receiver does not need to carry relevant data in response. The Type field of the receiver may be set to Ox10, which is configured to indicate that the receiver carries relevant data in the response frame to the received data frame with the Type field of Ox01 or 0x02. The Type field of the receiver may be set to 0x20, which is configured to indicate that the receiver does not carry relevant data in the response frame to the received data frame with the Type field of 0x03. The Type field of the receiver may be set to 0x05, which is configured to indicate that the receiver does not respond to the received data frame with the Type field of 0x05, and mainly configured for real-time data transmission, transparent transmission, broadcast communication, etc.

There is an ID field (session scenario), i.e., the ID field is configured to determine a session scenario in which the initiating session party and the requested session party are in. Exemplarily, the ID field may be set according to the application scenario. For example, the ID 0x02 indicates that the initiating session party and the requested session party are querying the connection state. The ID 0x20 indicates that the initiating session party and the requested session party are transparently transmitting data. The ID 0x03 indicates that the initiating session party and the requested session party are transmitting heartbeat data.

There is a PayloadLength (size of data payload area), representing the amount of user data transmitted in the data frame. Exemplarily, the PayloadLength is configured to represent the amount of Data 0, ..., Data N actually transmitted.

There are Data 0, ..., Data N (0 to N pieces of data), representing the data actually transmitted.

There is a Checksum, configured to check whether the data transmission is incorrect. The verification principle as follows: (FrameNumber+SRC+DEST+Type+ID+PayloadLength+DATA 0+... DATA n)^0xFF. When replacement characters appear in the frame content, the checksum needs to be calculated using original data.

In this embodiment, the data frame in the session is encapsulated by using the custom SLIP format, ensuring the accuracy and stability of data transmission.

In some embodiments, as shown in FIG. 5, another calling method is provided. Taking the method executed by the calling terminal 102 as an example, the method includes the following steps:

In step 501, a robot call request is encapsulated and generated based on a custom serial communication protocol.

In step 502, the robot call request is sent to the LoRa gateway, such that the LoRa gateway determines a target robot based on the robot call request and sends a control instruction to the target robot, such that the target robot goes to a location of the calling terminal in response to the control instruction.

In some embodiments, the method further includes: outputting arrival prompt information in response to an arrival prompt instruction. The arrival prompt instruction is generated by the LoRa gateway in response to an arrival message sent by the target robot after the target robot arrives at the location of the calling terminal, and the arrival message is encapsulated and generated based on the custom serial communication protocol.

In some embodiments, as shown in FIG. 6, another calling method is provided. Taking the method executed by the target robot 1031 as an example, the method includes the following steps:

In step 601, a control instruction sent by the LoRa gateway is obtained. The control instruction is generated by the LoRa gateway based on a robot call request sent by the calling terminal.

In step 602, the target robot goes to a location of the calling terminal in response to the control instruction.

In some embodiments, the control instruction includes a unique identification of the calling terminal. The method further includes: determining a map location of the calling terminal based on the unique identification of the calling terminal; and going to the location of the calling terminal based on the map location.

In some embodiments, the control instruction includes a map location of the calling terminal. The method further includes: going to the location of the calling terminal based on the map location. The map location is determined by the LoRa gateway based on a unique identification of the calling terminal contained in the robot call request.

In some embodiments, the method further includes: encapsulating and generating an arrival message based on a custom serial communication protocol when arriving at the location of the calling terminal, and sending the arrival message to the LoRa gateway. The arrival message is encapsulated with a second session mode identification, and a second session mode represented by the second session mode identification refers to sending response information that does not carry relevant data.

It should be understood that although the individual steps in the flow diagrams involved of the embodiments as described above are shown sequentially as indicated by arrows, the steps are not necessarily performed sequentially in the order indicated by the arrows. Unless explicitly stated herein, the execution of these steps is not strictly limited in order and these steps can be performed in any other order. Moreover, at least some of the steps in the flow diagrams involved of the embodiments as described above may include a plurality of steps or a plurality of stages that are not necessarily performed at the same time, but may be performed at different times. The order in which these steps or stages are performed is not necessarily sequential, and these steps may be performed alternately or alternately with other steps or at least some of the steps or stages in other steps.

Based on the same inventive concept, embodiments of the present disclosure also provide a calling device for implementing the calling method as described above. The solution to the problem provided by the device is similar to the implementation of the method as described above, so the specific features in one or more embodiments of the calling device provided below may be referred to the features of the calling method above and will not be repeated here.

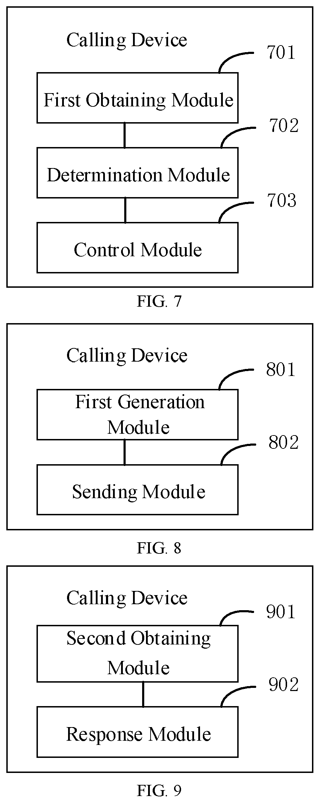

In some embodiments, as shown in FIG. 7, a calling device is provided. The calling device includes: a first obtaining module 701, a determination module 702, and a control module 703.

The first obtaining module 701 is configured to obtain a robot call request encapsulated and generated by a calling terminal based on a custom serial communication protocol.

The determination module 702 is configured to determine a target robot from a robot cluster in response to the robot call request.

The control module 703 is configured to send a control instruction to the target robot, such that the target robot goes to a location of the calling terminal in response to the control instruction.

In some embodiments, the determination module 702 is specifically configured to obtain state information reported by the robot cluster; and determine a robot whose state information is an idle state as the target robot from the robot cluster based on the state information.

In some embodiments, the determination module 702 is further specifically configured to obtain state information and location information reported by the robot cluster; obtain a map location of the calling terminal; determine robots whose state information is an idle state from the robot cluster based on the state information; and determine a robot closest to the calling terminal as the target robot from the robots whose state information is in an idle state based on the map location of the calling terminal and the location information.

In some embodiments, the custom serial communication protocol has a custom session mode field, and the robot call request includes a first session mode identification in the session mode field. The custom serial communication protocol further has a custom source address field, and the robot call request further includes an address of the calling terminal in the source address field. After sending the control instruction to the target robot, such that the target robot goes to the location of the calling terminal in response to the control instruction, the control module 703 is specifically configured to return call success response information matching the first session mode identification to the calling terminal based on the address of the calling terminal.

In some embodiments, a first session mode represented by the first session mode identification refers to that response information carrying relevant data needs to be sent. The control module 703 is further configured to: return call failure response information to the calling terminal based on the first session mode identification if there is no target robot in an idle state.

In some embodiments, the determination module 702 is further configured to determine state information of the target robot during the movement of the target robot to the location of the calling terminal; and perform a response processing for forced occupation in a case that the state information indicates that the target robot is forcibly occupied.

In some embodiments, the determination module 702 is further configured to: receive an arrival message sent by the target robot after the target robot arrives at the location of the calling terminal, the arrival message being encapsulated and generated based on the custom serial communication protocol, the arrival message being encapsulated a second session mode identification, a second session mode represented by the second session mode identification referring to sending response information that does not carry relevant data; and generate an arrival prompt instruction in response to the arrival message to control the calling terminal to output arrival prompt information based on the arrival prompt instruction and return response information that does not carry relevant data to the target robot based on the second session mode identification. The arrival prompt information is configured to prompt that the target robot has arrived at the calling terminal.

In some embodiments, as shown in FIG. 8, another calling device is provided. The calling device includes: a first generation module 801 and a sending module 802.

The first generation module 801 is configured to encapsulate and generate a robot call request based on a custom serial communication protocol.

The sending module 802 is configured to send the robot call request to a LoRa gateway, such that the LoRa gateway determines a target robot based on the robot call request and sends a control instruction to the target robot, such that the target robot goes to a location of the calling terminal in response to the control instruction.

In some embodiments, the calling device further includes a prompt module. The prompt module is configured to output arrival prompt information in response to an arrival prompt instruction. The arrival prompt instruction is generated by the LoRa gateway in response to an arrival message sent by the target robot when the target robot arrives at the location of the call terminal, and the arrival message is encapsulated and generated based on the custom serial communication protocol.

In some embodiments, as shown in FIG. 9, another calling device is provided. The calling device includes: a second obtaining module 901 and a response module 902.

The second obtaining module 901 is configured to obtain a control instruction sent by a LoRa gateway. The control instruction is generated by the LoRa gateway based on a robot call request sent by a calling terminal.

The response module 902 is configured to control a robot to go to a location of the calling terminal in response to the control instruction.

In some embodiments, the control instruction includes a map location of the calling terminal. The response module 902 is specifically configured to control the robot to go to the location of the calling terminal based on the map location. The map location is determined by the LoRa gateway through a unique identification of the calling terminal in the robot call request.

In some embodiments, the control instruction includes a unique identification of the calling terminal. The response module 902 is specifically configured to determine a map location of the calling terminal based on the unique identification of the calling terminal; and control the robot to go to the location of the calling terminal based on the map location.

In some embodiments, the calling device further includes a second generation module. The second generation module is configured to encapsulate and generate an arrival message based on a custom serial communication protocol when arriving at the location of the calling terminal, and send the arrival message to the LoRa gateway. The arrival message is encapsulated with a second session mode identification, and a second session mode represented by the second session mode identification refers to sending response information that does not carry relevant data.

The individual modules in the above calling device can be implemented in whole or in part by software, hardware and combinations thereof. Each of the above modules may be embedded in hardware form or independent of a processor in a computer device, or may be stored in software form on a memory in the computer device so that the processor can be called to perform the operations corresponding to each of the above modules.

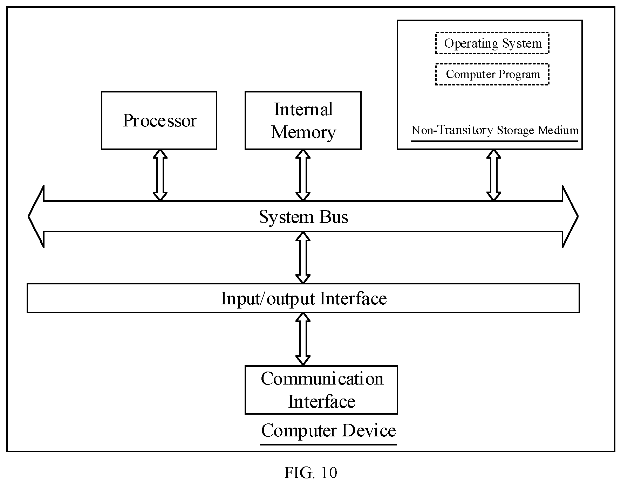

In some embodiments, a computer device is provided, which may be a gateway, a robot, or a calling terminal. A diagram illustrating an internal configuration of the computer device may be shown in FIG. 10. The computer device includes a processor, a memory, and a communication interface connected via a system bus. The processor of the computer device is configured to provide computing and control capabilities. The memory of the computer device includes a non-transitory storage medium and an internal memory. The non-transitory storage medium stores operating systems and computer programs. The internal memory provides an environment for the operation of the operating systems and the computer programs in the non-transitory storage medium. The communication interface of the computer device is configured to communicate with an external terminal via a network connection. The computer programs are executed by the processor in order to implement a calling method.

It should be understood by a person of ordinary skill in the art that the configuration illustrated in FIG. 10 is only a block diagram of part of the configuration related to the solution of the present disclosure, and does not constitute a limitation on the computer device to which the solution of the present disclosure is applied. A specific the computer device may include more or less components than those shown in the figure, or may combine some components, or may have a different arrangement of components.

In some embodiments, a computer device is provided. The computer device includes a memory and a processor. The memory stores a computer program, and the processor implements the steps in each of the method embodiments described above when executing the computer program.

In some embodiments, a computer-readable storage medium is provided, storing a computer program. When the computer program is executed by a processor, the steps in each of the method embodiments described above are implemented.

In some embodiments, a computer program product is provided, including a computer program. When the computer program is executed by a processor, the steps in each of the method embodiments described above are implemented.

A person of ordinary skill in the art may understand that implementation of all or part of the processes in the methods of the above embodiments may be completed by instructing the relevant hardware through a computer program. The computer program may be stored in a non-transitory computer-readable storage medium. When the computer program is executed, it may include the processes of the embodiments of the above methods. Any reference to memory, database or other medium used of the embodiments provided in the present disclosure may include at least one of a non-transitory and a transitory memory. The non-transitory memory may include a read-only memory (ROM), a magnetic tape, a floppy disk, a flash memory, an optical memory, a high-density embedded non-transitory memory, a resistive random-access memory (ReRAM), a magneto resistive random-access memory (MRAM), a ferroelectric random-access memory (FRAM), a phase change memory (PCM), or a graphene memory, etc. The transitory memory may include a random-access memory (RAM) or an external cache memory, etc. As an illustration rather than a limitation, the random-access memory may be in various forms, such as a static random-access memory (SRAM) or a dynamic random-access memory (DRAM), etc. The databases involved of the embodiments provided by the present disclosure may include at least one of a relational database and a non-relational database. The non-relational database may include, but is not limited to, a blockchain-based distributed database, etc. The processor involved of the embodiments provided by the present disclosure may be, but is not limited to, a general purpose processor, a central processor, a graphics processor, a digital signal processor, a programmable logic device, a data processing logic device based on quantum computation, and the like.

## Claims

1. A robot calling system based on Long Range,
LoRa, the calling system comprising: a LoRa gateway (101), at least one calling terminal (102), and a robot cluster (103), the at least one calling terminal (102) and the robot cluster (103) establishing LoRa communication with the LoRa gateway (101);
wherein the calling terminal (102) is configured to encapsulate and generate a robot call request based on a custom serial communication protocol, and send the robot call request to the LoRa gateway (101);
the LoRa gateway (101) is configured to determine a target robot from the robot cluster (103) in response to the robot call request, and send a control instruction to the target robot; and
the target robot is configured to go to a location of the calling terminal (102) in response to the control instruction;
wherein the custom serial communication protocol comprises a custom session mode field;
the target robot is further configured to encapsulate and generate an arrival message based on the custom serial communication protocol when arriving at the location of the calling terminal (102), and send the arrival message to the LoRa gateway (101); the arrival message is encapsulated with a second session mode identification, and a second session mode represented by the second session mode identification refers to sending response information that does not carry relevant data;
the LoRa gateway (101) is further configured to send an arrival prompt instruction to the calling terminal (102) in response to the arrival message, and return the response information that does not carry the relevant data to the target robot based on the second session mode identification; and
the calling terminal (102) is further configured to output arrival prompt information in response to the arrival prompt instruction; wherein
the arrival prompt information is configured to prompt that the target robot has arrived at the calling terminal (102).

2. The robot calling system based on LoRa according to claim 1, wherein the control instruction comprises a unique identification of the calling terminal (102), and the target robot is further configured to:
determine a map location of the calling terminal (102) based on the unique identification of the calling terminal (102); and
go to the location of the calling terminal (102) based on the map location.

3. The robot calling system based on LoRa according to claim 1, wherein the control instruction comprises a map location of the calling terminal (102), and the target robot is further configured to:
go to the location of the calling terminal (102) based on the map location;
wherein the map location is determined by the LoRa gateway (101) based on a unique identification of the calling terminal (102) contained in the robot call request.

4. The robot calling system based on LoRa according to claim 1, wherein the LoRa gateway (101) comprises a gateway and a cloud platform;
wherein the gateway communicates with the cloud platform, the gateway communicates with the calling terminal (102), and the cloud platform communicates with the robot cluster (103).

5. The robot calling system based on LoRa according to claim 4, wherein the gateway is configured to achieve communication between the calling terminal (102) and the robot cluster (103), and the cloud platform is configured to assist the gateway in calculating relevant data.

6. A calling method, executed by a Long Range,
LoRa gateway (101), the method comprising:
obtaining a robot call request encapsulated and generated by a calling terminal based on a custom serial communication protocol (step 201), wherein the custom serial communication protocol comprises a custom session mode field;
determining a target robot from a robot cluster in response to the robot call request (step 202);
sending a control instruction to the target robot, such that the target robot goes to a location of the calling terminal in response to the control instruction (step 203);
receiving an arrival message sent by the target robot after the target robot arrives at the location of the calling terminal (102), the arrival message being encapsulated and generated based on the custom serial communication protocol, the arrival message being encapsulated with a second session mode identification, and a second session mode represented by the second session mode identification referring to sending response information that does not carry relevant data (step S306);
generating an arrival prompt instruction in response to the arrival message to control the calling terminal (102) to output arrival prompt information based on the arrival prompt instruction, the arrival prompt information being configured to prompt that the target robot has arrived at the calling terminal (102) (step S307); and returning response information that does not carry relevant data to the target robot based on the second session mode identification (step S308).

7. The calling method according to claim 6, wherein determining the target robot from the robot cluster in response to the robot call request comprises:
obtaining state information reported by the robot cluster; and
determining, based on the state information, a robot whose state information is an idle state as the target robot from the robot cluster based on the state information.

8. The calling method according to claim 6, wherein determining the target robot from the robot cluster in response to the robot call request comprises:
obtaining state information and location information reported by the robot cluster;
obtaining a map location of the calling terminal (102);
determining robots whose state information is an idle state from the robot cluster based on the state information; and
determining a robot closest to the calling terminal (102) as the target robot from the robots whose state information is an idle state based on the map location of the calling terminal (102) and the location information.

9. The method according to claim 6, wherein the robot call request comprises a first session mode identification in the session mode field, the custom serial communication protocol further has a custom source address field, the robot call request further comprises an address of the calling terminal (102) in the source address field, and after sending the control instruction to the target robot, such that the target robot goes to the location of the calling terminal (102) in response to the control instruction, the method further comprises:
returning call success response information matching the first session mode identification to the calling terminal (102) based on the address of the calling terminal (102).

10. The method according to any one of claims 6 to 9, wherein the method further comprises:
determining state information of the target robot during a movement of the target robot to the location of the calling terminal (102); and
performing a response processing for forced occupation in a case that the state information indicates that the target robot is in a forced occupation state, the response processing for the forced occupation referring to a processing performed in a case that the state information of the target robot is in the forced occupation state.

11. A calling method, executed by a calling terminal (102), the method comprising:
encapsulating and generating a robot call request based on a custom serial communication protocol (step 501), wherein the custom serial communication protocol comprises a custom session mode field; and
sending the robot call request to a Long Range, LoRa gateway, such that the LoRa gateway determines a target robot based on the robot call request, and sends a control instruction to the target robot, such that the target robot goes to a location of the calling terminal in response to the control instruction (step 502);
wherein the robot call request comprises a first session mode identification in the session mode field; receiving, from the LoRa gateway, a call success response information matching the first session mode identification;
receiving, from the LoRa gateway, an arrival prompt instruction;
and
outputting arrival prompt information in response to the arrival prompt instruction, wherein the arrival prompt information is configured to prompt that the target robot has arrived at the calling terminal (102) (step S309).

12. A calling method, executed by a robot, the method comprising:
obtaining a control instruction sent by a Long Range, LoRa gateway, the control instruction being generated by the LoRa gateway based on a robot call request sent by a calling terminal (step 601); and
going to a location of the calling terminal in response to the control instruction (step 602);
encapsulating and generating an arrival message based on a custom serial communication protocol when arriving at the location of the calling terminal (102), and sending the arrival message to the LoRa gateway (101) (step S306), wherein the custom serial communication protocol comprises a custom session mode field, and the arrival message is encapsulated with a second session mode identification, and a second session mode represented by the second session mode identification refers to sending response information that does not carry relevant data;
and receiving, from the LoRa gateway, response information that does not carry relevant data (step S308).

13. The calling method according to claim 12, wherein the control instruction comprises a unique identification of the calling terminal, and going to the location of the calling terminal in response to the control instruction (step 602) comprises:
determining a map location of the calling terminal based on the unique identification of the calling terminal;
going to the location of the calling terminal based on the map location; or
wherein the control instruction comprises a map location of the calling terminal, and going to the location of the calling terminal in response to the control instruction comprises:
going to the location of the calling terminal based on the map location;
the map location being determined by the LoRa gateway based on a unique identification of the calling terminal in the robot call request.

## Patentansprüche

1. Ein Roboterrufsystem auf der Basis von Long Range, LoRa, wobei das Rufsystem Folgendes beinhaltet: ein LoRa-Gateway (101), mindestens ein rufendes Endgerät (102) und einen Roboter-Cluster (103), wobei das mindestens eine rufende Endgerät (102) und der Roboter-Cluster (103) eine LoRa-Kommunikation mit dem LoRa-Gateway (101) herstellt;
wobei das rufende Endgerät (102) konfiguriert ist, um eine Roboterrufanforderung auf der Basis eines kundenspezifischen seriellen Kommunikationsprotokolls einzukapseln und zu erzeugen und die Roboterrufanforderung an das LoRa-Gateway (101) zu senden;
das LoRa-Gateway (101) konfiguriert ist, um einen Zielroboter aus dem Roboter-Cluster (103) als Reaktion auf die Roboterrufanforderung zu bestimmen und eine Steueranweisung an den Zielroboter zu senden; und
der Zielroboter konfiguriert ist, um als Reaktion auf die Steueranweisung zu einem Standort des rufenden Endgeräts (102) zu gehen;
wobei das kundenspezifische serielle Kommunikationsprotokoll ein kundenspezifisches Sitzungsmodusfeld beinhaltet;
der Zielroboter ferner konfiguriert ist, um eine Ankunftsnachricht auf der Basis des kundenspezifischen seriellen Kommunikationsprotokolls einzukapseln und zu erzeugen, wenn er am Standort des rufenden Endgeräts (102) ankommt, und die Ankunftsnachricht an das LoRa-Gateway (101) zu senden; die Ankunftsnachricht in einer zweiten Sitzungsmodusidentifikation eingekapselt ist und ein zweiter Sitzungsmodus, der durch die zweite Sitzungsmodusidentifikation dargestellt wird, sich auf das Senden von Antwortinformationen bezieht, die keine relevanten Daten tragen; das LoRa-Gateway (101) ferner konfiguriert ist, um als Reaktion auf die Ankunftsnachricht eine Ankunftseingabeanweisung an das rufende Endgerät (102) zu senden und die Antwortinformationen, die keine relevanten Daten tragen, auf der Basis der zweiten Sitzungsmodusidentifikation an den Zielroboter zurückzugeben; und
das rufende Endgerät (102) ferner konfiguriert ist, um als Reaktion auf die Ankunftseingabeanweisung Ankunftseingabeinformationen auszugeben;
wobei die Ankunftseingabeinformationen konfiguriert sind, um einzugeben, dass der Zielroboter am rufenden Endgerät (102) angekommen ist.

2. Roboterrufsystem auf der Basis von LoRa gemäß Anspruch 1, wobei die Steueranweisung eine eindeutige Identifikation des rufenden Endgeräts (102) beinhaltet und der Zielroboter ferner konfiguriert ist, um:
einen Kartenstandort des rufenden Endgeräts (102) auf der Basis der eindeutigen Identifikation des rufenden Endgeräts (102) zu bestimmen; und
zum Standort des rufenden Endgeräts (102) auf der Basis des Kartenstandorts zu gehen.

3. Roboterrufsystem auf der Basis von LoRa gemäß Anspruch 1, wobei die Steueranweisung einen Kartenstandort des rufenden Endgeräts (102) beinhaltet und der Zielroboter ferner konfiguriert ist, um:
zum Standort des rufenden Endgeräts (102) auf der Basis des Kartenstandorts zu gehen;
wobei der Kartenstandort durch das LoRa-Gateway (101) auf der Basis einer eindeutigen Identifikation des rufenden Endgeräts (102) bestimmt wird, die in der Roboterrufanforderung enthalten ist.

4. Roboterrufsystem auf der Basis von LoRa gemäß Anspruch 1, wobei das LoRa-Gateway (101) ein Gateway und eine Cloud-Plattform beinhaltet;
wobei das Gateway mit der Cloud-Plattform kommuniziert, das Gateway mit dem rufenden Endgerät (102) kommuniziert und die Cloud-Plattform mit dem Roboter-Cluster (103) kommuniziert.

5. Roboterrufsystem auf der Basis von LoRa gemäß Anspruch 4, wobei das Gateway konfiguriert ist, um eine Kommunikation zwischen dem rufenden Endgerät (102) und dem Roboter-Cluster (103) zu erreichen, und die Cloud-Plattform konfiguriert ist, um das Gateway beim Berechnen relevanter Daten zu unterstützen.

6. Ein Rufverfahren, das von einem Long-Range-Gateway, LoRa-Gateway, (101) ausgeführt wird, wobei das Verfahren Folgendes beinhaltet:
Erhalten einer Roboterrufanforderung, die von einem rufenden Endgerät auf der Basis eines kundenspezifischen seriellen Kommunikationsprotokolls eingekapselt und erzeugt wird (Schritt 201), wobei das kundenspezifische serielle Kommunikationsprotokoll ein kundenspezifisches Sitzungsmodusfeld beinhaltet;
Bestimmen eines Zielroboters aus einem Roboter-Cluster als Reaktion auf die Roboterrufanforderung (Schritt 202);
Senden einer Steueranweisung an den Zielroboter, sodass der Zielroboter als Reaktion auf die Steueranweisung zu einem Standort des rufenden Endgeräts geht (Schritt 203); Empfangen einer Ankunftsnachricht, die vom Zielroboter gesendet wird, nachdem der Zielroboter am Standort des rufenden Endgeräts (102) ankommt, wobei die Ankunftsnachricht auf der Basis des kundenspezifischen seriellen Kommunikationsprotokolls eingekapselt und erzeugt wird, wobei die Ankunftsnachricht in einer zweiten Sitzungsmodusidentifikation eingekapselt ist und ein zweiter Sitzungsmodus, der durch die zweite Sitzungsmodusidentifikation dargestellt wird, sich auf das Senden von Antwortinformationen bezieht, die keine relevanten Daten tragen (Schritt S306);
Erzeugen einer Ankunftseingabeanweisung als Reaktion auf die Ankunftsnachricht, um das rufende Endgerät (102) zu steuern, um auf der Basis der Ankunftseingabeanweisung Ankunftseingabeinformationen auszugeben, wobei die Ankunftseingabeinformationen konfiguriert sind, um einzugeben, dass der Zielroboter am rufenden Endgerät (102) angekommen ist (Schritt S307); und
Zurückgeben von Antwortinformationen, die keine relevanten Daten tragen, auf der Basis der zweiten Sitzungsmodusidentifikation an den Zielroboter (Schritt S308).

7. Rufverfahren gemäß Anspruch 6, wobei das Bestimmen des Zielroboters aus dem Roboter-Cluster als Reaktion auf die Roboterrufanforderung Folgendes beinhaltet:
Erhalten von Zustandsinformationen, die vom Roboter-Cluster gemeldet werden; und
Bestimmen, auf der Basis der Zustandsinformationen, eines Roboters, dessen Zustandsinformationen ein Ruhezustand sind, als Zielroboter aus dem Roboter-Cluster auf der Basis der Zustandsinformationen.

8. Rufverfahren gemäß Anspruch 6, wobei das Bestimmen des Zielroboters aus dem Roboter-Cluster als Reaktion auf die Roboterrufanforderung Folgendes beinhaltet:
Erhalten von Zustandsinformationen und Standortinformationen, die durch den Roboter-Cluster berichtet werden;
Erhalten eines Kartenstandorts des rufenden Endgeräts (102);
Bestimmen von Robotern, deren Zustandsinformationen ein Ruhezustand sind, aus dem Roboter-Cluster auf der Basis der Zustandsinformationen; und
Bestimmen eines Roboters, der dem rufenden Endgerät (102) am nächsten ist, als Zielroboter aus den Robotern, deren Zustandsinformationen ein Ruhezustand sind, auf der Basis des Kartenstandorts des rufenden Endgeräts (102) und der Standortinformationen.

9. Verfahren gemäß Anspruch 6, wobei
die Roboterrufanforderung eine erste Sitzungsmodusidentifikation im Sitzungsmodusfeld beinhaltet, das kundenspezifische serielle Kommunikationsprotokoll ferner ein kundenspezifisches Quelladressfeld aufweist, die Roboterrufanforderung ferner eine Adresse des rufenden Endgeräts (102) im Quelladressfeld beinhaltet und nach dem Senden der Steueranweisung an den Zielroboter, sodass der Zielroboter als Reaktion auf die Steueranweisung zum Standort des rufenden Endgeräts (102) geht, das Verfahren ferner Folgendes beinhaltet:
Zurückgeben von Ruferfolgsantwortinformationen, die mit der ersten Sitzungsmodusidentifikation übereinstimmen, auf der Basis der Adresse des rufenden Endgeräts (102) an das rufende Endgerät (102).

10. Verfahren gemäß einem der Ansprüche 6 bis 9, wobei das Verfahren ferner Folgendes beinhaltet:
Bestimmen von Zustandsinformationen des Zielroboters während einer Bewegung des Zielroboters zum Standort des rufenden Endgeräts (102); und
Durchführen einer Antwortverarbeitung für Zwangsbelegung in einem Fall, in dem die Zustandsinformationen angeben, dass sich der Zielroboter in einem Zwangsbelegungszustand befindet, wobei sich die Antwortverarbeitung für die Zwangsbelegung auf eine Verarbeitung bezieht, die in einem Fall durchgeführt wird, in dem sich die Zustandsinformationen des Zielroboters im Zwangsbelegungszustand befinden.

11. Ein Rufverfahren, das von einem rufenden Endgerät (102) ausgeführt wird, wobei das Verfahren Folgendes beinhaltet:
Einkapseln und Erzeugen einer Roboterrufanforderung auf der Basis eines kundenspezifischen seriellen Kommunikationsprotokolls (Schritt 501), wobei das kundenspezifische serielle Kommunikationsprotokoll ein kundenspezifisches Sitzungsmodusfeld beinhaltet; und
Senden der Roboterrufanforderung an ein Long-Range-Gateway, LoRa-Gateway, so dass das LoRa-Gateway einen Zielroboter auf der Basis der Roboterrufanforderung bestimmt und eine Steueranweisung an den Zielroboter sendet, so dass der Zielroboter als Reaktion auf die Steueranweisung an einen Standort des rufenden Endgeräts geht (Schritt 502);
wobei die Roboterrufanforderung eine erste Sitzungsmodusidentifikation in dem Sitzungsmodusfeld beinhaltet;
Empfangen, von dem LoRa-Gateway, von Ruferfolgsantwortinformationen, die mit der ersten Sitzungsmodusidentifikation übereinstimmen;
Empfangen, von dem LoRa-Gateway, einer Ankunftseingabeanweisung;
und
Ausgeben von Ankunftseingabeinformationen als Reaktion auf die Ankunftseingabeanweisung, wobei die Ankunftseingabeinformationen konfiguriert sind, um einzugeben, dass der Zielroboter am rufenden Endgerät (102) angekommen ist (Schritt S309).

12. Ein Rufverfahren, das von einem Roboter ausgeführt wird, wobei das Verfahren Folgendes beinhaltet:
Erhalten einer Steueranweisung, die von einem Long-Range-Gateway, LoRa-Gateway, gesendet wird, wobei die Steueranweisung vom LoRa-Gateway auf der Basis einer Roboterrufanforderung erzeugt wird, die von einem rufenden Endgerät gesendet wird (Schritt 601); und
Gehen zu einem Standort des rufenden Endgeräts als Reaktion auf die Steueranweisung (Schritt 602);
Einkapseln und Erzeugen einer Ankunftsnachricht auf der Basis eines kundenspezifischen seriellen Kommunikationsprotokolls, wenn sie am Standort des rufenden Endgeräts (102) ankommt, und Senden der Ankunftsnachricht an das LoRa-Gateway (101) (Schritt S306),
wobei das kundenspezifische serielle Kommunikationsprotokoll ein kundenspezifisches Sitzungsmodusfeld beinhaltet und die Ankunftsnachricht in einer zweiten Sitzungsmodusidentifikation eingekapselt ist und ein zweiter Sitzungsmodus, der durch die zweite Sitzungsmodusidentifikation dargestellt wird, sich auf das Senden von Antwortinformationen bezieht, die keine relevanten Daten tragen;
und Empfangen, von dem LoRa-Gateway, von Antwortinformationen, die keine relevanten Daten tragen (Schritt S308).

13. Rufverfahren gemäß Anspruch 12, wobei die Steueranweisung eine eindeutige Identifikation des rufenden Endgeräts beinhaltet und das Gehen zum Standort des rufenden Endgeräts als Reaktion auf die Steueranweisung (Schritt 602) Folgendes beinhaltet:
Bestimmen eines Kartenstandorts des rufenden Endgeräts auf der Basis der eindeutigen Identifikation des rufenden Endgeräts;
Gehen zum Standort des rufenden Endgeräts auf der Basis des Kartenstandorts; oder wobei die Steueranweisung einen Kartenstandort des rufenden Endgeräts beinhaltet und das Gehen zum Standort des rufenden Endgeräts als Reaktion auf die Steueranweisung Folgendes beinhaltet:
Gehen zum Standort des rufenden Endgeräts auf der Basis des Kartenstandorts;
wobei der Kartenstandort durch das LoRa-Gateway auf der Basis einer eindeutigen Identifikation des rufenden Endgeräts in der Roboterrufanforderung bestimmt wird.

## Revendications

1. Un système d'appel de robot basé sur la longue portée, *(Long Range,* LoRa), le système d'appel comprenant : une passerelle LoRa (101), au moins un terminal d'appel (102), et une grappe de robots (103), l'au moins un terminal d'appel (102) et la grappe de robots (103) établissant une communication LoRa avec la passerelle LoRa (101) ; dans lequel le terminal d'appel (102) est configuré pour encapsuler et générer une demande d'appel de robot sur la base d'un protocole de communication série personnalisé, et envoyer la demande d'appel de robot à la passerelle LoRa (101) ;
la passerelle LoRa (101) est configurée pour déterminer un robot cible parmi la grappe de robots (103) en réponse à la demande d'appel de robot, et envoyer une instruction de commande au robot cible ; et
le robot cible est configuré pour aller jusqu'à un emplacement du terminal d'appel (102) en réponse à l'instruction de commande ;
dans lequel le protocole de communication série personnalisé comprend un champ de mode de session personnalisé ;
le robot cible est en outre configuré pour encapsuler et générer un message d'arrivée sur la base du protocole de communication série personnalisé lorsqu'il arrive à l'emplacement du terminal d'appel (102), et envoyer le message d'arrivée à la passerelle LoRa (101) ; le message d'arrivée est encapsulé avec une deuxième identification de mode de session, et un deuxième mode de session représenté par la deuxième identification de mode de session fait référence à l'envoi d'informations de réponse qui ne transportent pas de données pertinentes ;
la passerelle LoRa (101) est en outre configurée pour envoyer une instruction d'indication d'arrivée au terminal d'appel (102) en réponse au message d'arrivée, et renvoyer les informations de réponse qui ne transportent pas les données pertinentes au robot cible sur la base de la deuxième identification de mode de session ; et
le terminal d'appel (102) est en outre configuré pour délivrer en sortie des informations d'indication d'arrivée en réponse à l'instruction d'indication d'arrivée ;
dans lequel les informations d'indication d'arrivée sont configurées pour indiquer que le robot cible est arrivé au niveau du terminal d'appel (102).

2. Le système d'appel de robot basé sur la LoRa selon la revendication 1, dans lequel l'instruction de commande comprend une identification unique du terminal d'appel (102), et le robot cible est en outre configuré pour :
déterminer un emplacement sur une carte du terminal d'appel (102) sur la base de l'identification unique du terminal d'appel (102) ; et
aller jusqu'à l'emplacement du terminal d'appel (102) sur la base de l'emplacement sur une carte.

3. Le système d'appel de robot basé sur la LoRa selon la revendication 1, dans lequel l'instruction de commande comprend un emplacement sur une carte du terminal d'appel (102), et le robot cible est en outre configuré pour :
aller jusqu'à l'emplacement du terminal d'appel (102) sur la base de l'emplacement sur une carte ;
dans lequel l'emplacement sur une carte est déterminé par la passerelle LoRa (101) sur la base d'une identification unique du terminal d'appel (102) contenue dans la demande d'appel de robot.

4. Le système d'appel de robot basé sur la LoRa selon la revendication 1, dans lequel la passerelle LoRa (101) comprend une passerelle et une plate-forme nuagique ;
dans lequel la passerelle communique avec la plate-forme nuagique, la passerelle communique avec le terminal d'appel (102), et la plate-forme nuagique communique avec la grappe de robots (103).

5. Le système d'appel de robot basé sur la LoRa selon la revendication 4, dans lequel la passerelle est configurée pour accomplir une communication entre le terminal d'appel (102) et la grappe de robots (103), et la plate-forme nuagique est configurée pour aider la passerelle à calculer des données pertinentes.

6. Un procédé d'appel, exécuté par une passerelle longue portée, LoRa, (101), le procédé comprenant :
l'obtention d'une demande d'appel de robot encapsulée et générée par un terminal d'appel sur la base d'un protocole de communication série personnalisé (étape 201), le protocole de communication série personnalisé comprenant un champ de mode de session personnalisé ;
la détermination d'un robot cible parmi une grappe de robots en réponse à la demande d'appel de robot (étape 202) ;
l'envoi d'une instruction de commande au robot cible, de telle sorte que le robot cible va jusqu'à un emplacement du terminal d'appel en réponse à l'instruction de commande (étape 203) ;
la réception d'un message d'arrivée envoyé par le robot cible après que le robot cible est arrivé à l'emplacement du terminal d'appel (102), le message d'arrivée étant encapsulé et généré sur la base du protocole de communication série personnalisé, le message d'arrivée étant encapsulé avec une deuxième identification de mode de session, et un deuxième mode de session représenté par la deuxième identification de mode de session faisant référence à l'envoi d'informations de réponse qui ne transportent pas de données pertinentes (étape S306) ;
la génération d'une instruction d'indication d'arrivée en réponse au message d'arrivée pour commander le terminal d'appel (102) pour qu'il délivre en sortie des informations d'indication d'arrivée sur la base de l'instruction d'indication d'arrivée, les informations d'indication d'arrivée étant configurées pour indiquer que le robot cible est arrivé au niveau du terminal d'appel (102) (étape S307) ; et
le renvoi d'informations de réponse qui ne transportent pas de données pertinentes au robot cible sur la base de la deuxième identification de mode de session (étape S308).

7. Le procédé d'appel selon la revendication 6, dans lequel la détermination du robot cible parmi la grappe de robots en réponse à la demande d'appel de robot comprend :
l'obtention d'informations d'état rapportées par la grappe de robots ; et
la détermination, sur la base des informations d'état, d'un robot dont les informations d'état sont un état inactif comme le robot cible parmi la grappe de robots sur la base des informations d'état.

8. Le procédé d'appel selon la revendication 6, dans lequel la détermination du robot cible parmi la grappe de robots en réponse à la demande d'appel de robot comprend :
l'obtention d'informations d'état et d'informations d'emplacement rapportées par la grappe de robots ;
l'obtention d'un emplacement sur une carte du terminal d'appel (102) ;
la détermination de robots dont les informations d'état sont un état inactif parmi la grappe de robots sur la base des informations d'état ; et
la détermination d'un robot le plus proche du terminal d'appel (102) comme le robot cible parmi les robots dont les informations d'état sont un état inactif sur la base de l'emplacement sur une carte du terminal d'appel (102) et des informations d'emplacement.

9. Le procédé selon la revendication 6, dans lequel
la demande d'appel de robot comprend une première identification de mode de session dans le champ de mode de session, le protocole de communication série personnalisé a en outre un champ d'adresse source personnalisé, la demande d'appel de robot comprend en outre une adresse du terminal d'appel (102) dans le champ d'adresse source, et après l'envoi de l'instruction de commande au robot cible, de telle sorte que le robot cible va jusqu'à l'emplacement du terminal d'appel (102) en réponse à l'instruction de commande, le procédé comprend en outre :
le renvoi d'informations de réponse de réussite d'appel concordant avec la première identification de mode de session au terminal d'appel (102) sur la base de l'adresse du terminal d'appel (102).

10. Le procédé selon l'une quelconque des revendications 6 à 9, le procédé comprenant en outre :
la détermination d'informations d'état du robot cible pendant un déplacement du robot cible jusqu'à l'emplacement du terminal d'appel (102) ; et
la réalisation d'un traitement de réponse pour une occupation forcée dans un cas où les informations d'état indiquent que le robot cible est dans un état d'occupation forcée, le traitement de réponse pour l'occupation forcée faisant référence à un traitement réalisé dans un cas où les informations d'état du robot cible sont dans l'état d'occupation forcée.

11. Un procédé d'appel, exécuté par un terminal d'appel (102), le procédé comprenant :
l'encapsulation et la génération d'une demande d'appel de robot sur la base d'un protocole de communication série personnalisé (étape 501), le protocole de communication série personnalisé comprenant un champ de mode de session personnalisé ; et
l'envoi de la demande d'appel de robot à une passerelle longue portée, LoRa, de telle sorte que la passerelle LoRa détermine un robot cible sur la base de la demande d'appel de robot, et envoie une instruction de commande au robot cible, de telle sorte que le robot cible va jusqu'à un emplacement du terminal d'appel en réponse à l'instruction de commande (étape 502) ;
dans lequel la demande d'appel de robot comprend une première identification de mode de session dans le champ de mode de session ;
la réception, en provenance de la passerelle LoRa, d'une information de réponse de réussite d'appel concordant avec la première identification de mode de session ;
la réception, en provenance de la passerelle LoRa, d'une instruction d'indication d'arrivée ;
et
la délivrance en sortie d'informations d'indication d'arrivée en réponse à l'instruction d'indication d'arrivée, les informations d'indication d'arrivée étant configurées pour indiquer que le robot cible est arrivé au niveau du terminal d'appel (102) (étape S309).

12. Un procédé d'appel, exécuté par un robot, le procédé comprenant :
l'obtention d'une instruction de commande envoyée par une passerelle longue portée, LoRa, l'instruction de commande étant générée par la passerelle LoRa sur la base d'une demande d'appel de robot envoyée par un terminal d'appel (étape 601) ; et
le fait d'aller jusqu'à un emplacement du terminal d'appel en réponse à l'instruction de commande (étape 602) ;
l'encapsulation et la génération d'un message d'arrivée sur la base d'un protocole de communication série personnalisé lors de l'arrivée à l'emplacement du terminal d'appel (102), et l'envoi du message d'arrivée à la passerelle LoRa (101) (étape S306), dans lequel le protocole de communication série personnalisé comprend un champ de mode de session personnalisé, et le message d'arrivée est encapsulé avec une deuxième identification de mode de session, et un deuxième mode de session représenté par la deuxième identification de mode de session fait référence à l'envoi d'informations de réponse qui ne transportent pas de données pertinentes ;
et la réception, en provenance de la passerelle LoRa, d'informations de réponse qui ne transportent pas de données pertinentes (étape S308).

13. Le procédé d'appel selon la revendication 12, dans lequel l'instruction de commande comprend une identification unique du terminal d'appel, et le fait d'aller jusqu'à l'emplacement du terminal d'appel en réponse à l'instruction de commande (étape 602) comprend :
la détermination d'un emplacement sur une carte du terminal d'appel sur la base de l'identification unique du terminal d'appel ;
le fait d'aller jusqu'à l'emplacement du terminal d'appel sur la base de l'emplacement sur une carte ; ou
dans lequel l'instruction de commande comprend un emplacement sur une carte du terminal d'appel, et le fait d'aller jusqu'à l'emplacement du terminal d'appel en réponse à l'instruction de commande comprend :
le fait d'aller jusqu'à l'emplacement du terminal d'appel sur la base de l'emplacement sur une carte ;
l'emplacement sur une carte étant déterminé par la passerelle LoRa sur la base d'une identification unique du terminal d'appel dans la demande d'appel de robot.
